# EUROPEAN PATENT APPLICATION

(11) **EP 2 907 797 A1**
(43) Date of publication of application: **19.08.2015**
(21) Application number: 14466006.5
(22) Date of filing: 17.02.2014
(51) Int. Cl.: C04B 41/85, C04B 41/50

(54) **The preparation for reduction of oxidation in graphite products**

(71) Applicant: AV EKO-COLOR s.r.o., 403 31 Usti nad Labem (CZ)
(72) Inventor: Vins, Oldrich, 403 31 Ústí nad Labem (CZ); Antos, Petr, 403 31 Ústí nad Labem (CZ)

(57) **Abstract**

The preparation for the reduction of oxidation in graphite products consisting of the solution comprising aluminum or zinc dihydrogenphosphate or their mixtures with the excess of metal oxide in the form of colloidal particle in the sizes of 20-500 nm.

## Description

### Technology

The technical solution concerns an increase in lifetime of graphite electrodes for electric arc furnaces or other products made of compacted graphite intended for metallurgical and refractory applications.

### The current state of the technology

Compared with the other materials, the carbonaceous material is characterised by low thermal expansion, excellent electrical conductivity and high resistance to high temperatures, temperature and chemical influences, and therefore, its use is very frequent and widespread (metallurgy, chemistry, energetics). One of the corrosion effects on carbon is active oxygen (air), which causes the oxidation at higher temperatures. Combinations of different refractory materials are used as antioxidants for the surface treatment of carbon, and also the method of the application differ. Some of the technologies use suspension of finely ground refractory oxides in the binder. The patent RU 2004104295 (2005) uses finely ground borosilicate glass dispersed in a mixed binder which is formed by ethyl silicate and silicone resin. Products are treated with 3-6 layers of the material and dried at 100 - 200°C. The Japanese patent 09301786 JPH (1997) uses coating mixture consisted of 70-90 % boric acid or ammonium borate and finely ground nitride, carbide or oxide. RU 2147565 for refractories containing carbon uses powder into the default mixture. The powder composition consists of alumina, silica and graphite. The mixture is first melted in a furnace and then ground. WO 2007015026 (2007) uses aluminum phosphate as binder in combination with suspension of heat-resistant oxide, borosilicate and metal oxide. The system is applied in several stages with intermediate drying and its application on graphite products is complex. Aluminum phosphate in combination with an alkaline phosphate is also used in the patent US 8025727 (2011), which does not address low content of the main refractory component - aluminum oxide and works with the content of aluminum oxide within the weight limits of 2-8 % which corresponds to the stoichiometry of aluminum dihydrogenphosphate. Another option is to use combinations of mono-aluminum phosphate in combination with colloidal silica in a suspension form. Although the use of an impregnating agent in a suspension form has a positive impact on the quality of solidity of the surface layer of graphite electrodes, it complicates the impregnation itself as it clogs the micropores. The combination of aluminum phosphate with other products is conducted by the attempt to suppress the negative effects of phase conversion of aluminum phosphate at high temperatures. Phase changes, silicon dioxide in particular, are accompanied by volume changes, which distort the surface of carbon material and also speeds up the oxidation at high temperature.

The starting mole ratio P₂O₅ : Al₂O₃ = 2.3 causes formation of hydrated phosphate AlH₃(PO₄)₂·H₂O as the main phase at normal temperature, which when thermal treated decomposes into three phases: berlinite and cristobalite form AlPO₄ and variscite Al(H₂PO₄)₃. Orthophosphate AlPO₄ is isomeric with SiO₂ and shows conversions which are corresponding to conversions of silica to tridymite and cristobalite. Variscite is highly hygroscopic and is passed for the next phase above 300°C. Dehydration of phosphates is terminated between 500 - 800 °C. Glass whose composition corresponds to metaphosphate Al(PO₃)₃ is formed at temperatures over 1100°C, which can then decompose to AlPO₄ with simultaneous evaporation of phosphorus pentoxide.

From the above follows the requirement that the impregnating composition contains as much alumina as possible, or possibly other metal refractory oxides, which remain in carbon material at high temperatures and do not volatilize as in case of diphosphorus pentoxide. At the same time the size of the particles of the impregnating composition must be convenient so that the impregnation penetrates into the pores of the material in a sufficient depth.

### The principle of the invention

The essence of durability of graphite products for arc and other metallurgical aggregates is the decrease in porosity and an increase the fire resistance of the surface layer of the graphite material by impregnation with a composition of a new kind. The aforementioned shortcomings of impregnating agents for graphite materials eliminate the preparation of a new composition. For impregnating of graphite electrodes can be used the solution of aluminum phosphate and/or zinc with a total concentration of 10 to 50 % by weight, with a weight ratio between diphosphorus pentaoxide and metal oxides 1.0 to 4.0. The preparation for the reduction of oxidation in graphite products on the basis of the solution of aluminum or zinc phosphate or their mixtures contains substantial part of metal in stoichiometric excess, which is bound in the form of oxide, which is present in colloidal and undissociated form in the amount of 10 to 50 % of the total content of the metal contained, the rest of the metal is present in ionic form and the total content of alumina and zinc is from 8 to 21 % by weight.

To improve wettability of graphite electrodes and thus improve and facilitate the impregnation of electrodes it is appropriate to add a nonionic surfactant in an amount of 0.2 to 5 wt%.

If the impregnating agent is applied suitably, e.g. by means of immersion in vacuum and subsequent drying and branding, it increases the lifetime (period of use) of graphite electrodes for electric arc furnaces by 20 to 30 %.

### Examples of the embodiment of the invention

### Example 1

The impregnating agent was prepared by dissolving 100 kg of commercial aluminum oxide-hydroxide at temperature 80°C in 670 liters of commercial dihydrogen phosphate solution. Into the solution it was added 5 kg of nonionic surfactant on the base of lauric acid diethylamide. Such a solution contained 31.8 wt% of phosphorus pentoxide and 14.1 wt% of alumina.

Graphite electrodes were impregnated in vacuum with the prepared solution. The extension of service of the electrodes (for durability) has been demonstrated in the metallurgical operation by one quarter i.e. 25 %.

### Example 2

The impregnating agent was prepared by dissolving 100 kg of zinc oxide nanoparticles doped by aluminum with a particle size 50 nm and specific surface 10.8 m²/g at room temperature in 0.7 liters of commercial zinc dihydrogen phosphate solution. Such a solution had the following chemical composition proven by the analysis using the optical emission spectrometry with inductively coupled plasma (see table below).

| **The element** | **Value (% by weight)** |
|---|---|
| P₂O₅ | 23.7 |
| ZnO content | 21.0 |
| Content Al₂O₃ | 0.52 |

Laboratory graphite crucibles were impregnated with the prepared solution at ambient atmospheric pressure. It increased the lifetime twice as much in a laboratory operation.

### Example 3

The impregnation agent was prepared by mixing 350 liters of commercial aluminum dihydrogenphosphate solution and 350 liters of zinc dihydrogenphosphate. 100 kg of commercial aluminum hydroxide-oxide was dissolved in the mixture at temperature 80 °C. It was added 5 kg of nonionic surfactant on the base of lauric acid diethylamide into the solution. Such a prepared solution had the following composition:

| **The element** | **Value (% by weight)** |
|---|---|
| P₂O₅ | 27 |
| ZnO | 6.8 |
| Al₂O₃ | 9.6 |

Graphite electrodes were impregnated in vacuum with the prepared solution. The extension of service of the electrodes (for durability) has been demonstrated in the metallurgical operation by one quarter i.e. 25 %.

### Industrial usability

The impregnation agent based on aluminum dihydrogenphosphate and/or zinc containing colloids aluminum oxide or zinc oxide, complemented by the ingredients, it is appropriate to apply in particular graphite electrodes intended for heating electric arc furnaces and other metallurgical aggregates in electrical energy.

Another possible use is impregnating graphite products (e.g. crucibles) that will be used at high temperatures in the oxidizing atmosphere and other refractory ceramic products that are characterised by increased porosity.

The application of impregnating agent shall be carried out by immersion and soaking at normal atmospheric pressure or vacuum, drying followed by firing at elevated temperature. It is also possible to apply more coats of the impregnating agent with sufficient technological intervals necessary for soaking the impregnating mixture.

## Claims

1. The preparation for the reduction of oxidation in graphite products based on aluminum or zinc dihydrogenphosphate solution or their mixtures, **characterised by** the fact that a substantial part of metal is in stoichiometric excess and is bound in the form of oxide, which is present in the undissociated form of colloid in an amount of 10-50 % of the total content of the metal contained, the rest of the metal is present in ionic form and the total content of alumina and zinc oxide is from 8 to 21 % by weight.

2. The impregnating agent according to claim 1 **characterised by** the fact that the mass ratio of the phosphorus pentoxide and metal oxides is 1.0 - 4.0 and the concentration of the solution is 10 - 50 % by weight.

3. Impregnating agent according to claim 1 **characterised by** undissociated colloidal metal oxide particles have a size of 20-500 nm.

4. The preparation for the reduction of oxidation in graphite electrodes **characterised by** the fact that it contains the addition 0.2 - 5 % by weight of nonionic surfactant.
